(19) **Europäisches Patentamt / European Patent Office / Office européen des brevets**

(11) **EP 3 804 051 B1**

(12) **EUROPEAN PATENT SPECIFICATION**

(45) Date of publication and mention
of the grant of the patent:
**21.08.2024 Bulletin 2024/34**

(21) Application number: **19745275.8**

(22) Date of filing: **04.06.2019**

(51) International Patent Classification (IPC):
$H01S\ 3/06^{(2006.01)}$    $H01S\ 3/08^{(2023.01)}$
$H01S\ 3/081^{(2006.01)}$    $H01S\ 3/0941^{(2006.01)}$
$H01S\ 3/10^{(2006.01)}$    $H01S\ 3/105^{(2006.01)}$
$H01S\ 3/108^{(2006.01)}$    $H01S\ 3/109^{(2006.01)}$
$H01S\ 3/16^{(2006.01)}$

(52) Cooperative Patent Classification (CPC):
**H01S 3/109; H01S 3/061; H01S 3/08054;
H01S 3/08059; H01S 3/0815; H01S 3/09415;
H01S 3/10053; H01S 3/105; H01S 3/108;
H01S 3/1611; H01S 3/1643**

(86) International application number:
**PCT/IB2019/054629**

(87) International publication number:
**WO 2019/234621 (12.12.2019 Gazette 2019/50)**

(54) **A LASER FOR REAL-TIME GENERATION OF HIGH-ORDER FREQUENCY-DOUBLED (SECOND-HARMONIC) LASER MODES WITH POLARISATION CONTROL**

LASER ZUR ECHTZEITERZEUGUNG HOCHWERTIGER FREQUENZVERDOPPELTER (ZWEITER HARMONISCHER) LASERMODEN MIT POLARISATIONSREGELUNG

LASER POUR LA GÉNÉRATION EN TEMPS RÉEL DE MODES LASER À FRÉQUENCE D'ORDRE ÉLEVÉ DOUBLÉE (DEUXIÈME HARMONIQUE) AVEC COMMANDE DE POLARISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2018 ZA 201803687**

(43) Date of publication of application:
**14.04.2021 Bulletin 2021/15**

(73) Proprietor: **CSIR**
**0184 Pretoria (ZA)**

(72) Inventors:
• **BELL, Lebohang Teboho**
**9835 Vrede (ZA)**
• **NGCOBO, Sandile**
**0181 Pretoria (ZA)**

(74) Representative: **Boult Wade Tennant LLP**
**Salisbury Square House**
**8 Salisbury Square**
**London EC4Y 8AP (GB)**

(56) References cited:
**CN-C- 1 162 945**    **US-A- 5 412 674**
**US-A1- 2007 041 421**

• **TAKASHIGE OMATSU ET AL: "Wavelength-versatile optical vortex lasers", JOURNAL OF OPTICS, INSTITUTE OF PHYSICS PUBLISHING, BRISTOL GB, vol. 19, no. 12, 20 November 2017 (2017-11-20), pages 123002, XP020322218, ISSN: 2040-8986, [retrieved on 20171120], DOI: 10.1088/2040-8986/AA9445**
• **HIDEO NAGAI ET AL: "LOW-NOISE OPERATION OF A DIODE-PUMPED INTRACAVITY-DOUBLED ND: YAG LASER USING A BREWSTER PLATE", IEEE JOURNAL OF QUANTUM ELECTRONICS, IEEE SERVICE CENTER, PISCATAWAY, NJ, USA, vol. 28, no. 4, 1 April 1992 (1992-04-01), pages 1164 - 1168, XP000272719, ISSN: 0018-9197, DOI: 10.1109/3.135242**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

The present application relates to a laser for real-time generation of high-order frequency-doubled (second-harmonic) laser modes with polarisation control. The laser typically is in the form of a green digital laser for on-demand intra-cavity selective excitation of second harmonic higher-order modes.

Green laser beams are generated using frequency doubling or nonlinear wave mixing techniques and have been extensively used in laser detection, spectroscopy, laser ranging, ocean exploitation, medical surgeries, particle manipulation, quantum communication and military applications.

The general scheme that has been prevalent for nonlinear wave mixing has normally involved using laser beams with a Gaussian $TEM_{00}$ profile since they are emitted by most laser resonators. The generated green laser beam from either inside or outside the laser cavity will then be customised and shaped using additional optical elements such as apertures, lenses and diffractive optical elements to the desired beam profile.

However, the normal approach of initially frequency doubling the beam and then later manipulating the spatial profile of the beam is cumbersome.

The present invention seeks to address this by providing an improved method to realise on-demand arbitrarily spatial shaping of frequency doubled laser modes within a laser cavity.

The article TAKASHIGE OMATSU ET AL: "Wavelength-versatile optical vortex lasers" discloses a computer-controlled vortex digital laser including in particular a spatial light modulator.

This article also discloses multi-color vortex radiation in the visible generated by intra-cavity second harmonic generation.

The document CN 1 162 94 discloses a frequency doubled laser comprising a non-linear crystal inside a resonator cavity.

## SUMMARY OF THE INVENTION

According to the present invention there is provided a frequency doubling or wave mixing digital laser as defined by independent claim 1.

The nonlinear crystal may be located inside the resonator cavity before the output coupler

In one example embodiment, the rear optical element creates a standing or travelling wave resonator.

Additionally, the at least one optical element is a spatial light modulator device designed to operate as a digitally addressed holographic mirror to display grey-scale image.

The nonlinear crystal may be positioned where the high-order fundamental beam is collinear.

In one example, the laser pump is a diode laser pump.

The laser generator medium may be an Nd:YAG crystal.

An example of a nonlinear crystal is a Potassium Titanyl Phosphate (KTP) crystal.

The Brewster window is preferably included in the laser resonator cavity to control the polarization to either horizontal or vertical or both.

## BRIEF DESCRIPTION OF THE DRAWING

**Figure 1**   is a block diagram illustrating an example laser system of the present invention that is end pumped;

**Figure 2**   is a block diagram illustrating an example of a side pumped laser system;

**Figure 3**   is a block diagram illustrating an example of dual laser system that has vertical and horizontal polarization control;

**Figure 4**   shows the grey-scale (0-255) digital holograms that were displayed on the SLM in Figure 1 for the generation of high-order ($LG_{p,l}$) and ($HG_{m,n}$)

**Figure 5**   shows a fundamental beam radius, W, versus cavity length, L, when the SLM is programmed to have a curved mirror for R200 & R400

**Figure 6**   is a schematic of the simulated resonator showing the angle of acceptance, $\psi j$, of the fundamental pump mode ($LG_{p=0,1=0}$ or $HG_{m=0,n=0}$) onto the KTP crystal for a **164 mm** cavity length with a holographic end-mirror of $R$ = **200 mm** and **R** = **400** *mm*;

**Figure 7** shows the observed intensity profiles for the fundamental pump modes, **w**, of ($LG_{p,l}$) (for **p = 0,1** & **l = 0, 1, 2**) and ($HG_{m,n}$) (for **m = 0,1** & **n = 0, 1, 2**) high-order modes when the radius of curvature of the end-mirror was set at $R$ = **200 mm**;

**Figure 8** shows the fundamental mode, *w*, radius sizes, $w_1$, as the function of mode-order ($LG_{p,l}$) and ($HG_{m,n}$) at the output coupler when the radius of curvature of the end-mirror is set at $R$ = **200** *mm*;

**Figure 9** shows the observed intensity profiles, **2w** of the SHG ($LG_{p,l}$) modes at the near-field (a), and at the far-field (b), respectively;

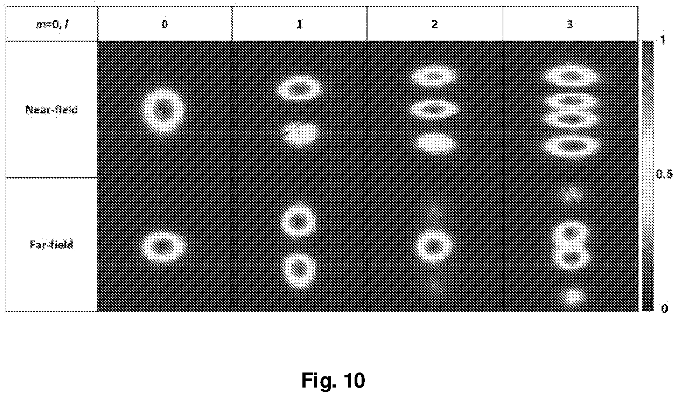

**Figure 10** shows the observed intensity profiles, 2w of the SHG ($LG_{p,l}$) modes at the near-field (a), and at the far-field (b), respectively;

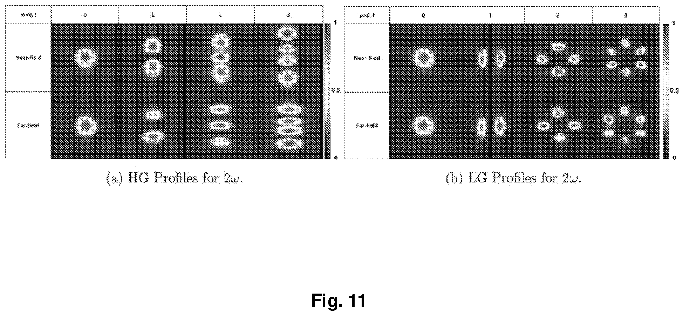

**Figure 11** shows the observed intensity profiles, 2w of the SHG ($LG_{p,l}$) modes at the near-field (a), and at the far-field (b), respectively; and

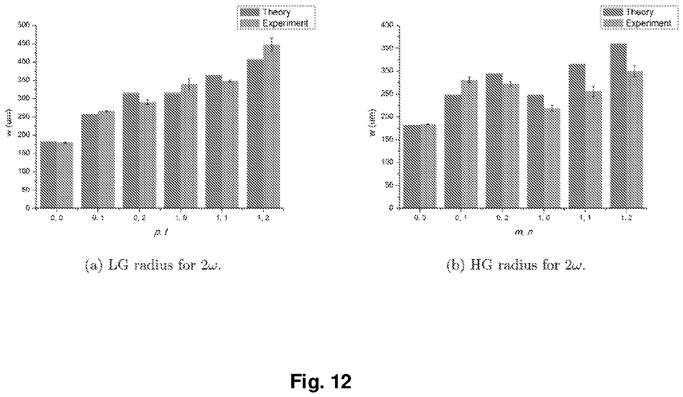

**Figure 12** shows The SHG, 2w, for (a) ($HG_{p,l}$) and (b) ($LG_{p,l}$) mode radius sizes, $w_2$, as the function of mode order at the output coupler when the radius of curvature of the end-mirror is set at $R$ = 400 *mm*.

## DESCRIPTION OF EMBODIMENTS

The system and methodology described herein relate to a frequency doubling or wave mixing laser typically in the form of a green digital laser for on-demand intra-cavity selective excitation of second harmonic higher-order modes.

Referring to the accompanying Figures, a green digital laser 10 is described.

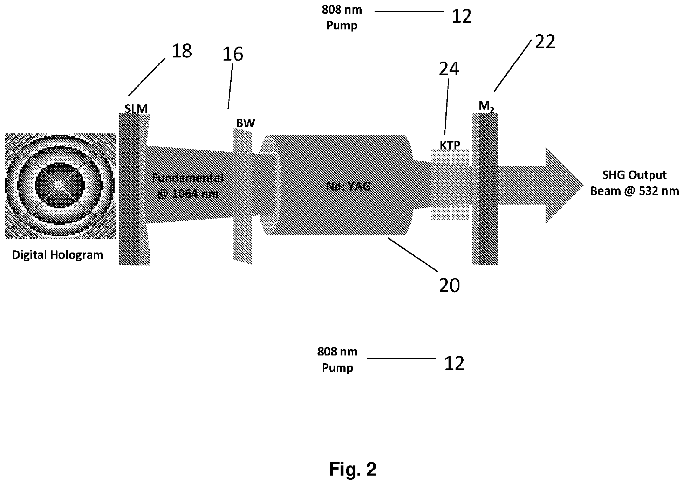

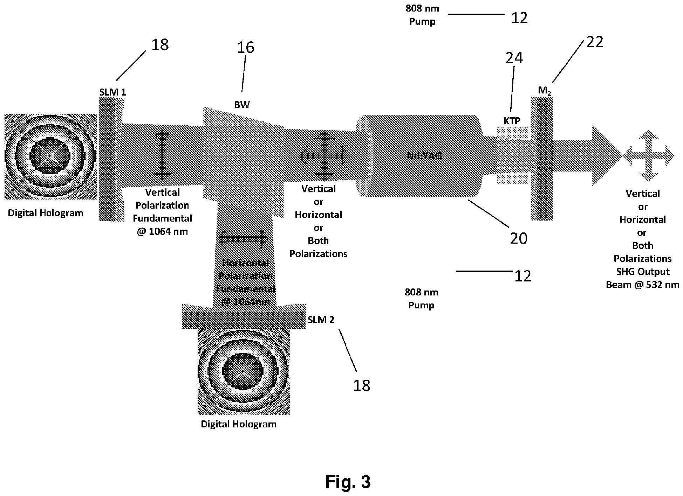

The laser 10 includes a laser pump 12 in the form of a diode laser pump which is arranged in an end-pump configuration. The laser 10 can also be a side pumped system as shown in Figure 2 and can also be a dual laser system as shown in Figure 3.

The utilisation of the diode laser as a source of energy for the laser 10 provides an advantage of having a source with a stable frequency, high brightness, long lifetime and better efficiency, especially when an end-pump setup is used such that the pump mode and the fundamental mode are matched.

A rear optical element 14 in the form of a mirror is used to create an L-shaped resonator to allow an end-pump configuration. The rear optical element 14 creates a standing or travelling wave resonator.

A Brewster window 16 allows the correct polarisation to be chosen for the spatial light modulator (SLM) 18 which will be described in more detail below.

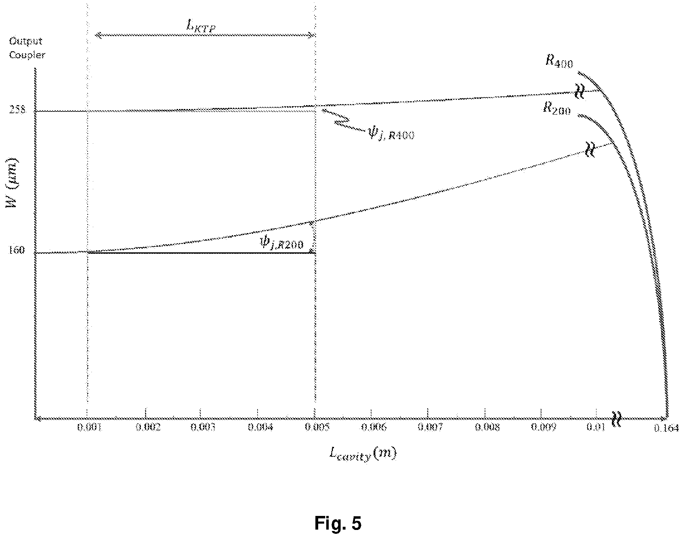

The Brewster window 16 is included in the laser resonator cavity to control the polarization to either horizontal or vertical. In Figure 5 the Brewster window 16 can control the polarization to either horizontal, vertical or both.

A laser generator medium 20 in the illustrated embodiment is an Nd:YAG crystal.

In the prototype, the applicant's diode end-pumped Nd:YAG solid-state digital laser was used.

The Nd:YAG operates at 1064 *nm* to create the fundamental frequency for pumping the intracavity nonlinear crystal 24 so as to generate a second harmonic frequency at 532 *nm* and cause the laser 10 to emit a green laser beam.

One advantage of using the digital laser is its ability of generating and switching between spatial high-order modes in real-time just by displaying a grey-scale digital hologram image on the screen of the Spatial Light Modulator (SLM) that has been integrated as the end-mirror of the resonator.

The laser 10 also includes an output coupler 22 and importantly a nonlinear crystal 24 located inside the resonator cavity.

In one example, the nonlinear crystal 24 is located inside the resonator cavity before the output coupler.

In the prototype, the nonlinear crystal 24 used was a Potassium Titanyl Phosphate (KTP) crystal but it will be appreciated that any suitable nonlinear crystal can be used.

The nonlinear KTP crystal was chosen since it has a relatively high SHG coefficient, high damage threshold, great optical nonlinearity and an excellent thermal stability.

Many other nonlinear crystals can be incorporated into the laser 10 for frequency doubling or wave mixing of high-order modes. Such nonlinear crystals are BBO (β-barium borate), KDP (potassium dihydrogen phosphate), LiNbO3 (lithium niobate), and LiB305 (lithium triborate) to name a few examples.

These nonlinear crystals have the appropriate optical properties such as strong birefringent, crystal symmetry, high damage threshold and a good transparency for both the fundamental pump beam and the frequency doubled or mixed beam.

In any event, the nonlinear crystal 24 is positioned where the high-order fundamental beam is collinear.

The laser 10 includes at least one further optical elements in the form of the SLM 18 that controls the phase or/and the amplitude of the fundamental laser beam to a high-order.

The SLM 18 is designed to operate as a digitally addressed holographic mirror to display gray-scale image

The SLM 18 modulates a high-order fundamental laser beam to achieve phase-matching inside the nonlinear crystal for the generation of the frequency doubled or mixed high-order laser beam.

The incorporation of the SLM 18 in the laser cavity creates an advantage of allowing extensive dynamic range of phase holograms to be introduced on the fundamental mode inside the laser cavity such that the phase matching inside the non-linear crystal of the fundamental mode and the generated second harmonic mode produces a wide range of spatial profiles that can either be out-of-phase, quasi-phase or purely in-phase.

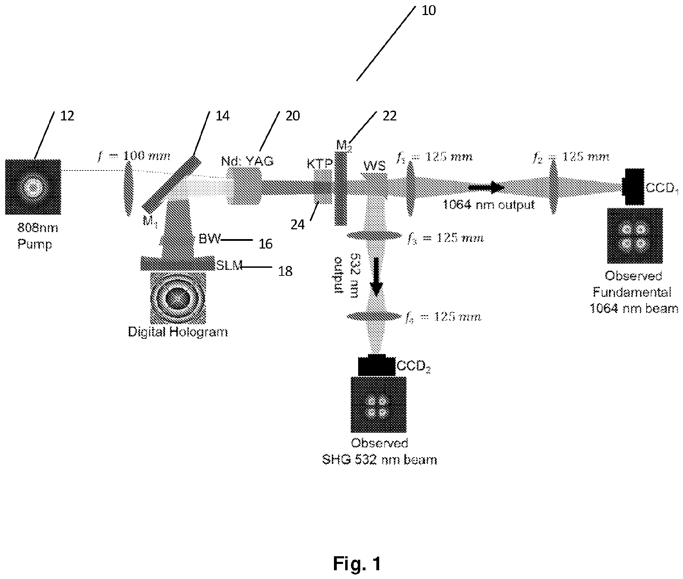

The laser 10 of Figure 1 will now be described in more detail.

By way of background it is noted that there are three types of frequency mixing; there is second harmonic generation (SHG), sum frequency generation (SFG) and difference-frequency generation (DFG).

All these three frequency mixing processes involve two pump waves, the fundamental frequencies, $w_1$ and $w_2$, incident on a nonlinear medium that generates a new wave of frequency $w_3$. The generated frequency $w_3$ could either be the sum or difference of $w_1$ and $w_2$, or the second harmonic frequency of each fundamental frequency where both have the same frequency $w_1$, and the generated second harmonic beam will have a frequency of $w_2 = w_1 + w_1$.

These frequency mixing concepts can be applied to other nonlinear optical interaction but for purposes of illustration only the description will mainly concentrate on the second harmonic generation which is also termed as frequency doubling.

Frequency doubling is generated by the second susceptibility, if one considers a vector field $\boldsymbol{E} = (E_x, E_y, E_z)$, the second order dielectric polarization $\boldsymbol{P}^{(2)}$ can be written as follow:

$$M = \begin{bmatrix} P_x^2 \\ P_y^2 \\ P_z^2 \end{bmatrix} = \begin{bmatrix} d_{11} & d_{12} & d_{13} & d_{14} \\ d_{21} & d_{22} & d_{23} & d_{24} \\ d_{31} & d_{32} & d_{33} & d_{34} \end{bmatrix} \begin{bmatrix} E_x^2 \\ E_y^2 \\ E_z^2 \\ 2E_yE_z \\ 2E_xE_z \\ 2E_xE_y \end{bmatrix} \tag{1}$$

with the dielectric constant of $\varepsilon_0 = 8.85 \times 10 - 12$ $As/(Vm)$, and $d_{ij}$ the nonlinearity coefficients. Furthermore, for loss-free materials, only 10 out of 18 nonlinearity coefficients are independent. Also depending on the symmetry of the crystal, the number of the independent coefficients is considerably reduced so that most frequency doubling crystals will have only two or three independents, and non-zero coefficients remaining. In the case of the KTP, the remaining nonlinearity coefficients are shown in Tab. 1: If a field $\mathbf{E}^{(1)}$ at the fundamental frequency $w_1$ is incident onto the crystal, a field $\mathbf{E}^{(2)}$ at the second harmonic frequency $w_2 = 2w_1$ is generated at the expense of the fundamental frequency.

Table 1: Non-zero nonlinearity coefficient $d_{mn}$ for KTP.

| $d_{mn}$ ($\times 10^{-12}$ m/V) | wavelength A (nm) |
| --- | --- |
| $d_{15} = d_{31} = \pm(6.5 \pm 0.5)$ | 1064 |
| $D_{24} = d_{32} = \pm(5.0 \pm 0.5)$ | 1064 |
| $d_{33} = 13.8$ | 1064 |

If we consider the propagation in the z-direction only, the transformation of the field and the electric polarisation into the complex notations is as follows:

$$E^{(1)} = \frac{1}{2}\left(A^{(1)}e^{i(\omega_1 t - k_1 z)} + C\right) \tag{2}$$

$$P^{(1)} = \frac{1}{2}\left(P_c^{(1)} + P_c^{*(1)}\right) \tag{3}$$

The electric field **P** acts as the source for both fields $\mathbf{E}^{(1)}$ and $\mathbf{E}^{(2)}$ which means that the propagation of each wave is described by the following wave equation:

$$\frac{\delta^2 E^{(1)}}{\delta z^2} - \frac{1}{c^2}\frac{\delta^2 E^{(2)}}{\delta t} = -\frac{1}{\epsilon_0}\frac{\delta^2 P}{\delta t^2} \tag{4}$$

where $c_0$ is the speed of light in the medium. The electric field polarization P is given by the sum of the field $\mathbf{E}^{(1)} + \mathbf{E}^{(2)}$. From Eq. 1, the amplitude $\mathbf{A}$ for the second harmonic and the fundamental is given as follow:

$$2ik_1\frac{\delta A^{(1)}}{\delta z} = \frac{\omega_1^2}{\epsilon_0 c_0^2} P_c^{(2)}(\omega_1)\left[e^{i(k_1 t - \omega_1 t)}\right]$$

$$\frac{\delta A^{(1)}}{\delta z} = \frac{2i\omega_1^2}{k_1 c^2} d_{eff}\, A^{(2)} A^{*(1)} e^{(-i\Delta k z)} \tag{5}$$

$$2ik_2\frac{\delta A^{(2)}}{\delta z} = \frac{\omega_2^2}{\epsilon_0 c_0^2} P_c^{(2)}(\omega_2)\left[e^{i(k_2 t - \omega_2 t)}\right]$$

$$\frac{\delta A^{(2)}}{\delta z} = \frac{2i\omega_2^2}{k_2 c^2} d_{eff}\, A^{(1)2} e^{(i\Delta k z)} \tag{6}$$

where $P_c^{(2)}(w)$ represents the components of $P_c^{(2)}$ that oscillates at the frequency $\omega$. The SHG process is then described by the interaction of the two coupled wave equations, Eq. 5 and Eq. 6 inside the nonlinear medium. The amplitude $A^{(2)}$ only increases significantly for $\Delta k = 2k_1 - k_2 = 0$, this is also known as phase-matching. If we consider the frequency doubling as the annihilation of two photons with energy $\hbar w_2$, into one photon with energy the phase-matching condition is equivalent to the conservation of momentum:

$$\hbar k_1 + \hbar k_1 = \hbar k_2 \tag{7}$$

Since the wave number is related to the frequency and the speed of light using $k = w/c$, this relation means that the fundamental wave and the second harmonic must propagate with the same speed to avoid destructive interference of the second harmonic along the propagation directions which then avoids dispersion. It is also possible to split the fundamental wave into an extraordinary wave and an ordinary wave to attain phase matching. The parameter phase mismatch, $\Delta k$, is then used to assess the degree of these phase analogous phenomena.

When there is a phase mismatch, $\Delta k \neq 0$, this means that different dipoles in the nonlinear crystals oscillate in different phases causing destructive interference within the crystal which will result to a low conversion efficiency of the SHG. This results to the fundamental pump frequency being undepleted such that the amplitude $A^{(2)} \ll A^{(1)}$, and the solution of the coupled equations, Eq. 5 and Eq. 6, for a crystal length, L, being given as:

$$A^{(2)}(z = L) = -\frac{i\omega_1}{n_2 c} d_{eff}\, A^{(1)2} \frac{\sin\left(\frac{\Delta k L}{2}\right)}{\frac{\Delta k L}{2}} e^{\left(\frac{i\Delta k L}{2}\right)} \tag{8}$$

The above solution clearly shows that the phase mismatch analogous of the coupled equations uses natural birefringence that exists in many nonlinear crystals for either phase matching or quasi phase matching. The term natural birefringence describes the dependency of the refractive index on the direction of polarization of the beam. The angle tuning of the pump beam with respect to the different axes of the nonlinear crystal allows for different polarization combinations to be achieved where there is phase matching.

For nonlinear crystal with refractive index n, the intensities $I_1$ and $I_2$ of the fundamental wave and the second harmonic wave are given as follow:

$$I_2(z) = I_1(0) \tanh^2\left[\sqrt{\frac{d_{eff}^2 \omega_1^2 I_1(0)}{n^3 2\epsilon_0 c_0^3}}\, z\right] = I_1(0) \tanh^2\left[\frac{z}{L}\right] \qquad (9)$$

$$I_1(z) = I_1(0) - I_2(z) \qquad (10)$$

where $d_{eff}$ is the effective nonlinear coefficient. The conversion efficiency is defined as the fraction of the fundamental beam power that is converted into the SHG:

$$\eta SHG = \tanh^2\left[\frac{z}{L}\right] \qquad (11)$$

where $z$ is the crystal separation and L is the length of the crystal. It is clear from Eq. 11 that at distance $z$ = L,57% of the fundamental beam power can be converted into the second harmonic beam. For a KTP crystal of length 10 $mm$, the fundamental beam intensity, $I_1(0)$, that will be required to convert 57% of the fundamental power into the SHG, where the fundamental wavelength is 1064 $nm$, will be 0.026 $GW/cm^2$. This is significantly less than the KTP crystal damage threshold of 3-3.5 $GW/cm^2$.

In circular symmetry, the power $P_w$ of the Gaussian beam with beam radius w and peak intensity $I_0$ is given by:

$$P_\omega = I_0 2\pi \int_0^\infty e^{[-2(r/w)^2]} r\, dr \quad \text{when } w^2 > 0$$
$$P_\omega = I_0 \pi \frac{w^2}{2} \qquad (12)$$

It must be noted that increasing the Gaussian mode order and size of the fundamental pump beam will lead to a low conversion efficiency of the SHG beam such that the wings of SHG structure will be less pronounced since the wings of the pump will have less intensity. This will result in the intensity of the second harmonic field not to be perfectly Gaussian and the SHG power will then be expressed as:

$$P_{2\omega} = I_0 2\pi \int_0^\infty e^{[-2(r/w)^2]} \tanh^2\left[\frac{z}{L} e^{(-r/w)}\right] r\, dr \qquad (13)$$

Due to the high-intensity level of the beam inside the laser resonator compared to the beam intensity outside, the KTP crystal was placed inside the laser resonator to generate frequency doubled laser beam, as shown in Fig.1.
As stated previously, the fundamental beam at 1064 $nm$ is generated by the active medium Nd: YAG and focused to the KTP. From chosen mirrors in Fig. 1 the conversion efficiency of the KTP acts as the output coupling loss of the laser resonator. If one considers fundamental beam power, $P_w$, incident on the KTP crystal and the power of the second harmonic wave generated to be $P_{2w}$, then the effect of the KTP crystal on the fundamental beam can be described by the reflectance R as follow:

$$R = 1 - \frac{P_{2\omega}}{P_\omega} \qquad (14)$$

$$R = 1 - \eta SHG \qquad (15)$$

Thus, the average intensity $I$ of the fundamental beam inside the Nd: YAG crystal can be calculated using steady-state conditions for round trip:

$$R' = e^{[(2g_0 l)/(1+2I/I_s)+2\alpha_0 l]} \qquad (16)$$

where $I_s$ is the saturated intensity, $g_0$ is the small-signal gain and the $\alpha_0 l$ is the loss per transit. This steady-state condition is only valid for low signal gain, and high reflectance $R$ because the $z$ - dependence of the fundamental wave intensity inside the KTP is neglected. The second harmonic wave output power is given as follow:

$$P_{2\omega} = A_1 I_s \alpha_0 l \left( \sqrt{\frac{g_0 l}{\alpha_0 l}} - 1 \right) \qquad (17)$$

where $A_1$ is the cross-sectional area of the fundamental beam in the Nd: YAG. One must also keep in mind that although if all the fundamental beam power can be converted into the second harmonic, the conversion efficiency of the KTP crystal may be extremely low. Typically, for diode-pumped Nd: YAG lasers with an efficiency of 48%, the conversion efficiency can be as low as 9.5%.

Looking at both circular and rectangular symmetry laser modes, the electric field distribution of circular and rectangular laser modes can be written as follow, derived from wave equation:

$$LG_{p,l}(r,z) = \sqrt{\frac{2p!}{\pi(p+|l|)!}} \times \frac{1}{w(z)} \left( \frac{\sqrt{2}r}{w(z)} \right)^{|l|} \times L_p^{|l|} \left( \frac{2r^2}{w(z)^2} \right) \times e^{\frac{-r^2}{w(z)^2} - \frac{ikr^2}{2R(z)}} \times e^{-ikz} \times e^{-il\phi}$$
$$\times e^{i\psi(p,|l|,z)} \qquad (18)$$

and

$$HG_{m,n}(r,z) = \sqrt{\frac{1}{2^{m+n} \times m! \, n!}} \times \frac{1}{w(z)} \times H_n \left( \sqrt{\frac{2x}{w(z)}} \right) \times H_n \left( \sqrt{\frac{2y}{w(z)}} \right) \times e^{\frac{-r^2}{w(z)^2} - \frac{ikr^2}{2R(z)}}$$
$$\times e^{-ikz} \times e^{i\psi(m,n,z)} \qquad (19)$$

where $L_p^l$ is the Laguerre polynomials of order $p$ and $l$; while $H_n$ and $H_m$ are Hermite polynomials of order $n$ and m;

and the Lauguerre-Gaussian mode Gouy phase $\psi(p,l,z) = (2p + |l| + 1)\arctan(\frac{z}{z_0})$ and for Hermite-Gaussian mode the Gouy phase is $\psi(m,n,z) = (|m| + |n| + 1)\arctan(\frac{z}{z_0})$. All other parameters have their usual meaning.

The lowest-order beam of both Laguerre-Gaussian ($LG_{0,0}$) and HermiteGaussian ($HG_{0,0}$) beam has a Gaussian beam profile and is obtained by setting $p = l = 0$ and $n = m = 0$, in Eq. (18) and Eq. (19) respectively. These solutions are often referred to as $TEM_{pl}$ and $TEM_{mn}$ beams, where TEM stands for transverse electric magnetic, within the paraxial approximation, both electric and magnetic fields of the EM wave are, in fact, approximately transverse to the z-direction. The intensity distribution of the $TEM_{pl}$ consists of rings of a central loop for null $l$ indices, and on the other hand for null $p$ indices they take a pattern of petal-like structure. The intensity distribution is given by the absolute square of Eq. 18 and Eq. 19.

For both circular and rectangular symmetries, the propagation and divergence of both ($LG_{pl}$) ᵢ and ($HG_{mn}$) modes respectively is shown to be:

$$w_{pl}(z) = w_0 \sqrt{2p + |l| + 1} \times \sqrt{1 + \left( \frac{z}{z_0} \right)^2} \quad \text{(circular symmetry),} \qquad (20)$$

$$\theta_{pl} = \theta_0 \sqrt{2p + |l| + 1} \quad \text{(circular symmetry),} \qquad (21)$$

and

$$w_{pl}(z) = w_0 \sqrt{2p + |l| + 1} \times \sqrt{1 + \left( \frac{z}{z_0} \right)^2} \quad \text{(rectangular symmetry in x-axis),} \qquad (22)$$

$$w_m(z) = w_0\sqrt{2m+1} \times \sqrt{1 + \left(\frac{z}{z_0}\right)^2} \quad \text{(rectangular symmetry in y-axis)}, \qquad (23)$$

$$w_{mn}(z) = \frac{w_m(z) + w_n(z)}{2} \quad \text{(rectangular symmetry of x and y-axis)}, \qquad (24)$$

$$\theta_m = \theta_0\sqrt{2m+1} \quad \text{(rectangular symmetry in x-axis)}, \qquad (25)$$

$$\theta_n = \theta_0\sqrt{2n+1} \quad \text{(rectangular symmetry in y-axis)}, \qquad (26)$$

where $w_0$ and $\theta_0$ represents the waist radius and the angle of divergence of the lowest-order fundamental Gaussian beam. The Rayleigh range is defined the same as in Gaussian beam using the following equation:

$$z_0 = \frac{\pi w_0^2}{\lambda} \qquad (27)$$

The beam radius describe by Eq. 20 and Eq. 24 are as a function of the propagation distance from the waist position.

In the illustrated example embodied, the generation of high-order Laguerre-Gaussian ($LG_{p,l}$) and high-order Hermit-Gaussian ($HG_{m,n}$) modes, the planoconcave diode end-pumped solid-state digital laser resonator of length 164 mm, was intracavity inserted with a nonlinear KTP crystal closer to the flat output coupler mirror and a spatial light modulation (SLM) to act as a digital holographic end-mirror of resonator cavity, as shown by the schematic of the experimental setup in Fig 1. The flat output coupler mirror reflectivity was 90% and the SLM (Hamamatsu LGOS-SLM X10468-03) reflectivity was 95% at wavelength of 1064 $nm$ respectively. The resonator was designed to form an L-shape in order to avoid illuminating and damaging the SLM with the residual 808 $nm$ pump light by including a 45° mirror (M1) within the laser resonator cavity that was highly reflective at 1064 $nm$ and highly transmissive at 808 $nm$. The 1.1% neodymium doped solid-state gain crystal of 25 mm length and 4 mm diameter was mounted inside a 21 °C water-cooled copper block. The Nd:YAG laser crystal was then end-pumped with a diode laser that could deliver a maximum power of 75 W at an operating wavelength of 808 $nm$ and a gain area with a radius of 1.2 $mm$ was excited within the centre of the Nd:YAG rod crystal.

The SLM was encoded with a reflective grey-scale (0-255) digital holographic image that was displayed on the screen of the SLM inside the laser resonator cavity. The holographic image was encoded to simultaneously control both the phase and amplitude of the fundamental 1064 $nm$ pump mode. The phase of the digital holographic image was used to control the mode size of the incident fundamental pump mode on to the KTP crystal and the amplitude of the digital holographic image was used to control type and order of the fundamental pump mode to be either $HG_{m,n}$ or $LG_{p,l}$ respectively. Since the SLM was a phase-only device, yet most of the desired holograms required both the amplitude and phase change to the field, the amplitude effect was encoded on the phase-only SLM using the well-known method of complex amplitude modulation.

The amplitude of the digital holographic image was encoded to have varying width thickness that were designed to be 98% match each null of the $LG_{p,l}$ or $HG_{m,n}$ mode, for order $p$, $l$ = 0,1,2 and $m$, $n$ = 0,1,2. The SLM was also encoded with digital holograms that had varies radius of curvature phases, $R$, from 200 $mm$ to 500 $mm$ with a step size of 50 $mm$. This was to easily control the mode radius size, $w_1$, of the fundamental 1064 $nm$ pump mode, and most importantly to also control the angle of acceptance, $\psi_j$, of the fundamental mode propagating inside the KTP crystal.

The angle tuning of the fundamental 1064 $nm$ pump mode was achieved by varying the radius of curvature of the end-mirror which allowed for various phase-matching conditions of the natural birefringence properties of the nonlinear KTP crystal to be possible for both perfect and quasi-phase matching. The simulated angle of acceptance, $\psi_j$, of the fundamental pump mode on to the KTP crystal decreases when the radius of curvature, $R$, of the holographic end-mirror is varied from R=200 mm, to R=400 mm, ($\psi_{j,R400}$ « $\psi_{j,R200}$) as shown in Fig. 2; When R=400 mm the fundamental pump mode propagating inside the KTP is collinear with almost a constant radius size, $w_{1_0}$, of 258 $\mu m$ which allowed for perfect phase matching. When R=200 $mm$ the fundamental pump mode propagating inside the KTP crystal was at an acute angle which allowed for quasi-phase matching to occur as the radius size, $w_1$ of the fundamental pump mode varied inside the crystal from 204 $\mu m$ to 160 $\mu m$. Therefore varying the $R$ of the end-mirror allows for the modulation of the nonlinear coefficients along the X and Y plane of the KTP to take place.

The propagation of the SHG mode with a radius size, $w_2$, and an amplitude structure, $A^{(2)}$, inside the KTP crystal is designed to be collinear and have a plane wavefront along the entire crystal length, $L$, as the two faces of the crystal are designed to be flat. Therefore the fundamental pump mode with an amplitude structure, $A^{(1)}$ that has a varying mode radius size, $w_1(z)$, along the KTP crystal length, like in the case of tight focusing using a curved mirror of R=200 *mm*, will result in the SHG mode not fully matching the phase, the mode structure profile and the radius size of the fundamental pump mode along the entire crystal length from $Z_L$ to $Z_0$, and this will result to the SHG mode not maintaining the mode structure profile of the fundamental pump mode as illustrated in Fig. 3. But at $Z_0$ to $Z_{L=0}$ of the crystal length, both the fundamental mode amplitude structures, $A^{(1)}$, and the frequency doubled SHG mode amplitude structure, $A^{(2)}$, are phase locked and have the same plane wavefront as illustrated in Fig. 3, such that the laser resonator will emit a frequency doubled SHG mode structure profile, $A^{(2)}$, that will be similar to the fundamental pump mode structure, $A^{(1)}$.

This is because along the propagation direction, $Z$, the fundamental pump mode acquires a phase shift which differs from that of a plane wave even though the optical frequency is constant and this phase difference is called the Gouy phase shift:

$$\psi(z) = \arctan\left(\frac{z}{z_0}\right) = \arctan\left(\frac{z\lambda}{\pi w_0^2}\right) \qquad (28)$$

This means that the phase fronts have to propagate somewhat faster leading to an effectively increased local phase velocity. This phase difference is then translated to the created SHG modes such that it results to a slight increased distanced between the wavefronts of modes, $w_{20j}$, compared with the collinear plane wave mode , $w_{20}$, of the same frequency. The electric field distribution of the SHG modes in circular and rectangular laser modes taking into account the Gouy phase shift can now be represent as:

$$SHG\left(LG_{p,l}\right) = \sum_{j=0}^{l} LG_{p,l}(r,z,\psi_j), \qquad (29)$$

and

$$SHG\left(HG_{m,n}\right) = \sum_{j=0}^{l} HG_{m,n}(r,z,\psi_j), \qquad (30)$$

where

$$\psi_j(z) = arctan\left(\frac{z\lambda}{\pi w_{20j}^2}\right), \qquad (31)$$

and

$$w_{20j}^2 = \frac{w_1(z_j)}{\sqrt{2}}. \qquad (32)$$

The $\psi_j$ represents the different variation in the Gouy phases on the SHG modes with different orders j. It must be understood that the phase shift of a Gaussian beam is not exactly the same as for a plane wave. A Gaussian beam can be considered as a superposition of plane waves with different propagation directions. Those plane wave components with propagation directions different from the beam axis experience smaller phase shifts along the propagation direction, z, and the overall phase shift will arises from a superposition of all these components. For higher-order transverse modes such as $LG_{p,l}$ and $HG_{m,n}$, the Gouy phase shift is stronger by a factor of $2p + l + 1$ and $m + n + 1$ respectively; and this show that the resonance frequencies of higher-order modes in optical resonators will be high. This will then be compensated by adjusting the radius of curvature, R, of the end-mirror such that the propagation wavefront is collinear and plane inside the entire KTP crystal length.

From Eq. 32 it must be understood that when $j = 0$, the fundamental pump mode will be collinear and have a plane wavefront inside the entire crystal length such that the Gouy phase shift will be constant with $\psi_{j=0}$. This will result to a perfectly phased matched high-order SHG mode that will reproduce the profile structure of the high-order fundamental pump mode.

For the generation of quasi-phased high-order SHG modes, $j \geq 0$, and this will results to some of the high-order SHG modes experiencing a phase shift and others not, and those SHG modes that experience a phase shift will produce a mode profile structure that will have a central maximum, that will be surrounded by a phased locked SHG mode. For the generation of non-phased high-order SHG modes, the structure of the fundamental mode will not be reproducible at all on the frequency doubled SHG mode. The intensity profile of the SHG mode will have mostly a dominant central maximum only, when $j > 0$, as all of the SHG modes will experience a Gouy phase shift that will be out-of-phase with the fundamental pump mode, even though the laser will be generating a frequency doubled SHG laser beam.

The dimensions of the intracavity nonlinear KTP crystal was 3 $mm \times$ 3 mm $\times$ 5 mm and it was mounted inside a copper block that was not temperature controlled. The nonlinear KTP crystal was highly reflective for 532 $nm$ on the left face diagonal of the crystal where the fundamental 1064 $nm$ pump mode would be first incident on the KTP crystal, and the right face diagonal of the crystal was highly non-reflective for 532 $nm$. Both 1064 $nm$ and 532 $nm$ beams exited the output coupler mirror (M2) parallel to each other. We used a beam splitter that acted as a wavelength separator (WS) to separate the 1064 $nm$ and 532 $nm$ wavelengths beams. Lens $f_1$ and $f_2$ were used to relay image the plane of the output coupler mirror for 1064 $nm$ onto the $CCD_1$, and Lens $f_3$ and $f_4$ and were used to relay image the plane of the output couple mirror for 532 $nm$ onto CCD2 camera, for the characterization of the frequency doubled SHG laser modes.

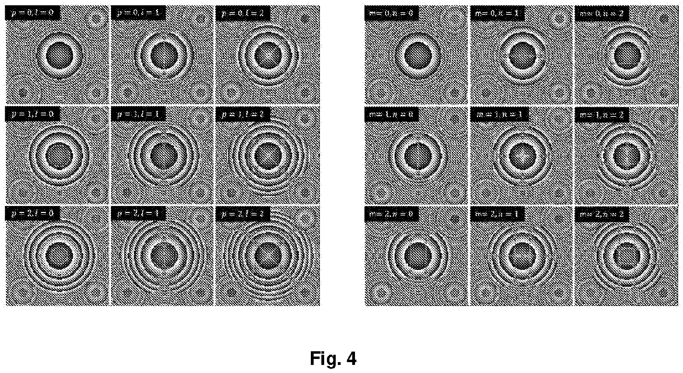

The method used to excite high-order modes from the laser cavity was by employing computer-generated hologram masks which were encoded as pixelated grey (0-255) images as shown in Fig. 2 and displayed onto an SLM that also acted as an end-mirror of the laser resonator. The results of the observed intensity distribution profiles generated by the laser resonator for Lagaurre-Gaussian modes, $LG_{p,l}$, and Hermite-Gaussian modes, $HG_{m,n}$, operating at 1064 $nm$ are shown in Fig. 4a and 4b respectively, when the radius of curvature of the end-mirror was set at $R = 200$ $mm$.

The 2D-intensity distribution profiles shown 6 were captured at the output coupler mirror of the laser resonator. The spatial profile of these fundamental high-order modes remained constant both in the near-held and at the far-held. This suggest that the generated fundamental laser modes are pure and of high quality. The experimental results of the mode radius sizes, $w_1$, of both the fundamental high-order $LG_{p,l}$ and $HG_{m,n}$ modes at the output coupler were compared to the theoretical solution shown in Fig. 5a and Fig. 5b respectively.

The results in Fig. 5 shows that the mode radius sizes, $w_1$, of the high-order fundamental ($LG_{p,l}$ and $HG_{m,n}$) modes, $w$, that are emitted by the laser resonator cavity were of appropriate dimensions and within the experimental error. At a wavelength of 1064 $nm$ these high-order modes of $LG_{p,l}$ and $HG_{m,n}$ were used as the fundamental pump mode of frequency, $w$, to pump the non-linear KTP crystal to produce frequency double, 2w, second harmonic generated (SHG) high-order modes with similar intensity distribution structure profile.

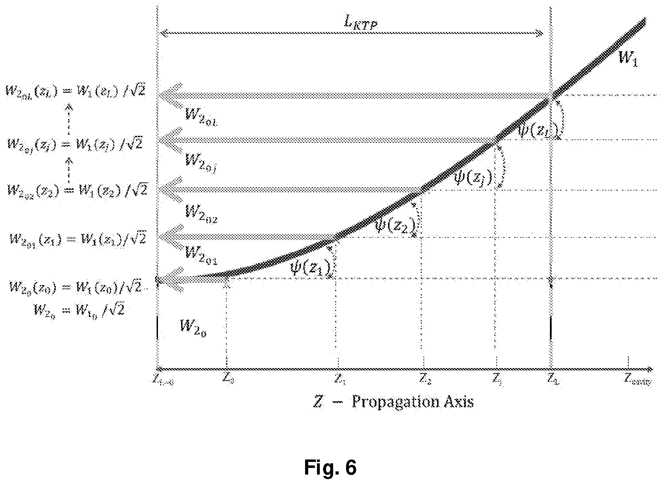

The results of pumping the nonlinear KTP crystal with the fundamental high-order ($LG_{p,l}$ and $HG_{m,n}$) modes, $w$, for the SHG of frequency doubled high-order ($LG_{p,l}$ and $HG_{m,n}$) modes, 2w, is shown in Fig. 6 below for both the near-field and far-field spatial profiles of the frequency doubled modes, respectively, when the radius of curvature of the end-mirror was set at $R = 200$ $mm$.

The near-field spatial intensity profiles of the SHG $LG_{p,l}$ modes, 2w, in Fig. 6a is similar to the intensity profile of the fundamental $LG_{p,l}$ pump modes, w shown in 5a; But at the far-field the spatial intensity profiles of the SHG $LG_{p,l}$ modes, 2w, as shown in Fig. 6b, is different from the fundamental $LG_{p,l}$ pump mode, $w$, as there is an added central intensity maximum for $LG_{0,2}$, $LG_{1,0}$, $LG_{1,1}$ and $LG_{1,2}$. The SHG of $LG_{0,1}$ mode shows a slight deformation of the intensity distribution structure profile at FF which also confirms a that there was quasi-phase matching of the fundamental pump mode.

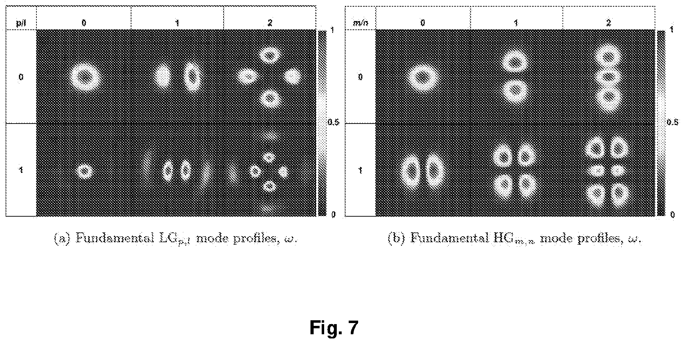

This phenomena also occurs for the SHG of $HG_{m,n}$ modes, 2w, as shown in Fig. 7, where the near-field spatial profiles of the SHG $HG_{m,n}$ modes, 2w, is similar to the fundamental $HG_{m,n}$ pump modes; But at the far-field the SHG $HG_{m,n}$ modes also have an added central intensity maximum for the $HG_{0,2}$ and $HG_{0,3}$ modes. The SHG of the $HG_{0,1}$ showed that this mode was similar at near-field and far-field and also to the fundamental pump mode.

The non-reproducibility of the far-field spatial intensity profiles of the SHG $LG_{p,l}$ and SHG $HG_{m,n}$ modes when compared to the near-field spatial intensity profiles, which is similar to the fundamental pump mode, is due to quasi-phase matching of the modes inside the KTP crystal. The SHG high-order modes experience various Gouy phases, where some of the phases of the SHG modes are partly in-phase and others out-phase with the fundamental pump mode.

The generation of high-order quasi-phased SHG modes at far-field shows that fundamental pump mode was not propagating perfectly collinearly inside the entire length of the nonlinear KTP crystal. This resulted to some of the SHG modes to be in-phase at the near-field and some to be out-of-phase with the fundamental pump mode. To achieve perfect phase-matching, the radius of curvature, R, of the end-mirror was increased in steps of 50 $mm$ by simply displaying rewritable digital holograms of appropriate $R$ on the SLM without any realignment of the laser resonator. This incremental adjustment allowed for the evaluation of the correct radius of curvature to be selected where the fundamental pump mode will have a constant mode radius, $w_{10}$, and a collinear spatial profile of the mode that will have a plane wavefront along the entire length of the KTP crystal.

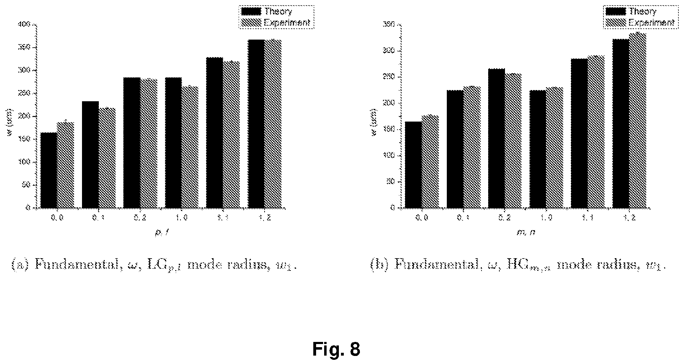

It was discovered that when the end-mirror is set at $R = 400$ mm which equated to a fundamental Gaussian ($LG_{00}$ or $HG_{00}$) mode radius size of $w_{10} = 258$ $\mu m$. The SHG high-order modes both at the far-field and near-field, their intensity structure profiles were similar to the fundamental pump mode profiles. This demonstrated that at $R = 400$ mm the fundamental modes were perfectly in-phase with the SHG modes and these results are shown in Fig. 8 for generation of both the SHG $HG_{m,n}$ and SHG $LG_{p,l}$ modes.

It is clear in Fig. 8 that the intensity structure profiles of the SHG high-order modes are similar at the far-field and at the near-field for all the for all the $LG_{p,l}$ and $HG_{m,n}$ modes. Additional analysis of the emitted SHG $LG_{p,l}$ and $HG_{m,n}$ modes radius sizes was performed by comparing them to the theoretical values using Eq. 20 and Eq. 22, where the estimated fundamental Gaussian mode radius size, $w_{1_0}$, of the resonator with an end-mirror of $R$ = 400 mm is 258 $\mu m$, which is then divided by $\sqrt{2}$ so as to phase-match the SHG modes as shown by Eq. 32 since all these modes are generated by a stable resonator.

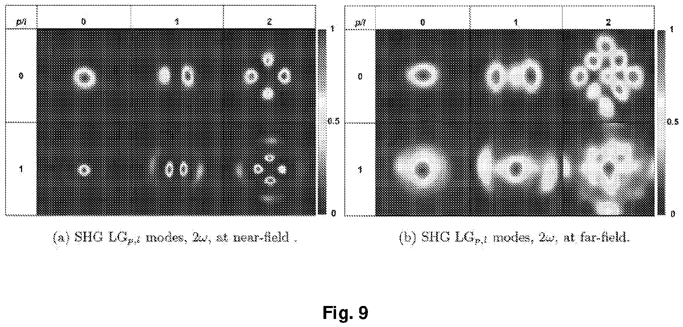

The experimental results of the SHG $LG_{p,l}$ and $HG_{m,n}$ mode radius sizes, $w_{2_0}$ in Fig. 9 clearly shows that the resonator was emitting the correct SHG high-order modes when compared to the theoretical values. The experimental mode radius sizes of SHG $LG_{p,l}$ were in very good agreement with the theoretical values as most of the values were within the error margin. There was also a general under valuing of the $HG_{m,n}$ mode radius of $HG_{0,2}$, $HG_{1,0}$, $HG_{1,1}$ and $HG_{1,2}$. All of these experimental deviations were due to misalignment of the laser resonator which produced asymmetrical radius mode values for $HG_{m,n}$ modes and this is shown by the $HG_{0,1}$, $HG_{1,0}$ mode radii which were supposed to be of similar values as the two modes are reciprocal and orthogonal in shape to another. The misalignment of the laser resonator caused the radius size of the $HG_{0,1}$ mode to increase by an equivalent value at which the $HG_{1,0}$ radius mode decreased, such that taking the average of the two theoretical values results to matching the predicted theoretical value of the two modes. The overall results demonstrates that the laser resonator was producing phase-matched SHG $LG_{p,l}$ and $HG_{m,n}$ modes that are in good agreement with theory and also that maintain their intensity mode structure both at the near-field and far-field was possible.

Thus the higher-order Laguerre-Gaussian and Hermite-Gaussian modes operating at 1064 $nm$ have successfully been converted to higher-order Laguerre-Gaussian and Hermite-Gaussian modes operating at 532 $nm$. Since the length of the nonlinear crystal, KTP, used was only 5 $mm$. The fundamental beam intensity $I_1$ (0) required to convert fundamental power into the second harmonic was 0.0213 $GW/cm2$, which was in good agreement with the theory. It is noted that to achieve a higher conversion efficiency and be able to generate other higher-order modes, a longer KTP with a bigger area should be used.

It will thus be appreciated that the laser 10 allows the generation of real-time, intracavity both quasi-phase and purely in-phase frequency doubled high-order Laguerre-Gaussian Modes and Hermit-Gaussian modes respectively in a single laser resonator, with single polarization that is either vertical or horizontal. In the case of a dual laser as shown in Fig. 1c, the generated frequency doubled high-order modes will either have a vertical polarization or horizontal polarization or both polarizations.

When these high-order Gaussian modes are purely in-phase they are reproducible both in the near field and far field.

## Claims

1. A frequency doubling or wave mixing digital laser configured to produce second harmonic generation of higher-order laser modes, the laser having an associated single resonator cavity, the laser apparatus including:

    a laser pump (10) ;
    a rear optical element or rear optical elements (14);
    a Brewster window (16) configured to control polarisation;
    a laser generator medium (20);
    an output coupler (22) located inside the resonator cavity;
    a nonlinear crystal (24) located inside the resonator cavity; and
    a spatial light modulator (18) that is configured to control one or more of the phase and the amplitude of the fundamental laser beam to a high-order, wherein the spatial light modulator is configured to modulate the high-order fundamental laser beam to achieve phase-matching inside the nonlinear crystal for the generation of the frequency doubled or mixed high-order laser beam.

2. A laser according to claim 1 wherein the nonlinear crystal is located inside the resonator cavity before the output coupler.

3. A laser according to claim 1 or claim 2 wherein the rear optical element or rear optical elements creates or create a standing or travelling wave resonator.

4. A laser according to any preceding claim wherein the spatial light modulator is designed to operate as a digitally addressed holographic mirror to display gray-scale image.

5. A laser according to any preceding claim wherein the nonlinear crystal is positioned where the high-order fundamental beam is collinear with the length of the nonlinear crystal.

6. A laser according to any preceding claim wherein the laser pump is a diode laser pump.

7. A laser according to any preceding claim wherein the laser generator medium is a Nd:YAG crystal.

8. A laser according to any preceding claim wherein the nonlinear crystal is a Potassium Titanyl Phosphate (KTP) crystal.

9. A laser according to any preceding claim wherein the Brewster window is included in the laser resonator cavity to control the polarization to either horizontal or vertical or both.


**Patentansprüche**

1. Digitaler Laser zur Frequenzverdopplung oder Wellenmischung, der zur Erzeugung der zweiten Harmonischen höherer Laser-Moden ausgelegt ist, wobei der Laser einen zugehörigen Einzelresonator-Hohlraum aufweist und die Laser-Vorrichtung umfasst:

    eine Laserpumpe (10);
    ein rückseitiges optisches Element oder rückseitige optische Elemente (14);
    ein Brewster-Fenster (16), das zur Steuerung der Polarisation konfiguriert ist;
    ein Lasergeneratormedium (20);
    einen im Resonatorhohlraum angeordneten Auskoppler (22);
    einen im Resonatorhohlraum angeordneten nichtlinearen Kristall (24) und
    einen räumlichen Lichtmodulator (18), der zur Steuerung der Phase und/oder Amplitude des fundamentalen Laserstrahls auf eine höhere Ordnung konfiguriert ist, wobei der räumliche Lichtmodulator zur Modulation des fundamentalen Laserstrahls auf eine höhere Ordnung konfiguriert ist, um eine Phasenanpassung innerhalb des nichtlinearen Kristalls zur Erzeugung des frequenzverdoppelten oder -gemischten Laserstrahls höherer Ordnung zu erreichen.

2. Laser nach Anspruch 1, bei dem der nichtlineare Kristall innerhalb des Resonatorhohlraums vor dem Auskoppler angeordnet ist.

3. Laser nach Anspruch 1 oder 2, bei dem das rückseitige optische Element oder die rückseitigen optischen Elemente einen Resonator mit stehender oder wandernder Welle erzeugt/erzeugen.

4. Laser nach einem der vorhergehenden Ansprüche, bei dem der räumliche Lichtmodulator ausgelegt ist, um als digital adressierter holographischer Spiegel zum Anzeigen eines Graustufenbilds zu arbeiten.

5. Laser nach einem der vorhergehenden Ansprüche, bei dem der nichtlineare Kristall dort angeordnet ist, wo die Fundamentale höherer Ordnung kollinear mit der Länge des nichtlinearen Kristalls ist.

6. Laser nach einem der vorhergehenden Ansprüche, bei dem die Laserpumpe eine Diodenlaserpumpe ist.

7. Laser nach einem der vorhergehenden Ansprüche, bei dem das Lasergeneratormedium ein Nd:YAG-Kristall ist.

8. Laser nach einem der vorhergehenden Ansprüche, bei dem der nichtlineare Kristall ein Kalium-Titanylphosphat-Kristall (KTP) ist.

9. Laser nach einem der vorhergehenden Ansprüche, bei dem das Brewster-Fenster in dem Laserresonatorhohlraum enthalten ist, um die Polarisation auf horizontal oder vertikal oder beides zu steuern.


**Revendications**

1. Laser numérique à doublement de fréquence ou à mélange d'ondes configuré pour produire une génération de seconde harmonique de modes laser d'ordre supérieur, le laser présentant une cavité résonnante unique associée, l'appareil laser comprenant :

une pompe laser (10) ;
un élément optique arrière ou des éléments optiques arrière (14) ;
une fenêtre brewstérienne (16) configurée pour commander la polarisation ;
un support générateur de laser (20) ;
un coupleur de sortie (22) situé à l'intérieur de la cavité résonnante ;
un cristal non linéaire (24) situé à l'intérieur de la cavité résonnante ; et
un modulateur spatial de lumière (18) qui est configuré pour commander une ou plusieurs parmi la phase et l'amplitude du faisceau laser fondamental à un ordre élevé, dans lequel le modulateur spatial de lumière est configuré pour moduler le faisceau laser fondamental d'ordre élevé pour réaliser une adaptation de phase à l'intérieur du cristal non linéaire pour la génération du faisceau laser d'ordre élevé à fréquence doublée ou mixte.

2. Laser selon la revendication 1, dans lequel le cristal non linéaire est situé à l'intérieur de la cavité résonnante avant le coupleur de sortie.

3. Laser selon la revendication 1 ou la revendication 2, dans lequel l'élément optique arrière ou les éléments optiques arrière crée ou créent un résonateur à ondes stationnaires ou progressives.

4. Laser selon l'une quelconque des revendications précédentes, dans lequel le modulateur spatial de lumière est conçu pour fonctionner comme un miroir holographique à adressage numérique pour afficher une image à échelle de gris.

5. Laser selon l'une quelconque des revendications précédentes, dans lequel le cristal non linéaire est positionné à l'endroit où le faisceau fondamental d'ordre élevé est colinéaire avec la longueur du cristal non linéaire.

6. Laser selon l'une quelconque des revendications précédentes, dans lequel la pompe laser est une pompe laser à diode.

7. Laser selon l'une quelconque des revendications précédentes, dans lequel le milieu générateur de laser est un cristal de Nd:YAG.

8. Laser selon l'une quelconque des revendications précédentes, dans lequel le cristal non linéaire est un cristal de phosphate de titanyle de potassium (KTP).

9. Laser selon l'une quelconque des revendications précédentes, dans lequel la fenêtre brewstérienne est comprise dans la cavité résonnante laser pour commander la polarisation à l'horizontale ou à la verticale, ou aux deux.

**Fig. 1**

**Fig. 2**

Fig. 3

Fig. 4

**Fig. 5**

**Fig. 6**

(a) Fundamental $LG_{p,l}$ mode profiles, $\omega$.

(b) Fundamental $HG_{m,n}$ mode profiles, $\omega$.

**Fig. 7**

(a) Fundamental, $\omega$, $LG_{p,l}$ mode radius, $w_1$.

(b) Fundamental, $\omega$, $HG_{m,n}$ mode radius, $w_1$.

**Fig. 8**

(a) SHG $LG_{p,l}$ modes, $2\omega$, at near-field .

(b) SHG $LG_{p,l}$ modes, $2\omega$, at far-field.

**Fig. 9**

**Fig. 10**

(a) HG Profiles for $2\omega$.　　(b) LG Profiles for $2\omega$.

**Fig. 11**

EP 3 804 051 B1

(a) LG radius for $2\omega$.  (b) HG radius for $2\omega$.

**Fig. 12**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 116294

**Non-patent literature cited in the description**

- **TAKASHIGE OMATSU et al.** *Wavelength-versatile optical vortex lasers*